# EUROPEAN PATENT APPLICATION

(11) **EP 4 563 029 A1**
(43) Date of publication of application: **04.06.2025**
(21) Application number: 23876595.2
(22) Date of filing: 07.10.2023
(51) Int. Cl.: A24F 40/95, A24F 40/40, A24F 40/90, A24F 40/20

(54) **ELECTRIC SYSTEM, CHARGING DEVICE AND AEROSOL GENERATING DEVICE**

(30) Priority: 10.10.2022 CN 202211235597
(71) Applicant: Shenzhen First Union Technology Co., Ltd., Shenzhen, Guangdong 518000 (CN)
(72) Inventor: FANG, Kengchun, Shenzhen, Guangdong 518000 (CN); XU, Zhongli, Shenzhen, Guangdong 518000 (CN); LI, Yonghai, Shenzhen, Guangdong 518000 (CN)
(74) Representative: Ran, Handong
(86) International application number: PCT/CN2023/123267
(87) International publication number: WO 2024/078393

(57) **Abstract**

Provided in the present application are an electric system, a charging device and an aerosol generating device. The electric system comprises an aerosol generating device and a charging device for the aerosol generating device. The charging device comprises: a receiving cavity and a second opening, wherein during use, the aerosol generating device can be removably received in the receiving cavity via the second opening; and a door cover, which may be selectively configured between a first position and a second position, wherein at the first position, the door cover allows the aerosol generating device to be removably received in the receiving cavity via the second opening; and at the second position, the door cover prevents the aerosol generating device, which is received in the receiving cavity, from being removed via the second opening, and can allow an aerosol generating article to be received, via a first opening, in the aerosol generating device for heating. By means of the electric system, when the charging device charges the aerosol generating device, the aerosol generating device can further receive an aerosol generating article and heat same for a user to inhale.

## Description

### CROSS-REFERENCE TO RELATED APPLICATIONS

This application claims priority to Chinese Patent Application No. 202211235597.9, filed with the China National Intellectual Property Administration on October 10, 2022 and entitled "ELECTRIC SYSTEM, CHARGING DEVICE AND AEROSOL GENERATING DEVICE", which is incorporated herein by reference in its entirety.

### TECHNICAL FIELD

Embodiments of this application relate to the field of heat not burning aerosol generation technologies, and in particular, to an electric system, an aerosol generation apparatus, and a charging apparatus.

### BACKGROUND

During use of smoking articles (such as cigarettes and cigars), tobacco is burned to produce tobacco aerosol. Attempts are made to produce products that release compounds without burning, to replace these tobacco-burning articles.

An example of such a product is a heating apparatus that releases compounds by heating rather than burning materials. For example, the materials may be tobacco or other non-tobacco products. These non-tobacco products may include or not include nicotine. The heating apparatus usually includes a heater to heat the tobacco or the non-tobacco products, and a chargeable battery cell configured to provide electric power to the heater. During use, to ensure sufficient electric power of the battery cell in the heating apparatus, a charging base cooperating with the heating apparatus is disposed. The heating apparatus is detachably combined with the charging base, so that the charging base charges the battery cell in the heating apparatus.

### SUMMARY

An embodiment of this application provides an electric system, including:
an aerosol generation apparatus, configured to heat an aerosol generating article to generate aerosol, where the aerosol generation apparatus includes a first opening, to receive the aerosol generating article; and
a charging apparatus, configured to charge the aerosol generation apparatus.

The charging apparatus includes:
a receiving cavity, configured to receive the aerosol generation apparatus, where a second opening is defined for the receiving cavity, and the aerosol generation apparatus can be detachably received in the receiving cavity through the second opening; and
a door cover that can be selectively configured between a first position and a second position.

The door cover opens the second opening at the first position, to allow the aerosol generation apparatus to be detachably received in the receiving cavity through the second opening.

The door cover at least partially closes the second opening at the second position, and avoids or exposes the first opening, to prevent the aerosol generation apparatus received in the receiving cavity from being removed through the second opening, and allow the aerosol generating article to be received in the aerosol generation apparatus through the first opening.

In some implementations, the door cover is arranged to be movable between the first position and the second position, to change a configuration between the first position and the second position.

In some implementations, the movement includes at least one of a linear movement or a rotational movement.

In some implementations, the charging apparatus includes a first end and a second end that face away from each other along a length direction.

The second opening is defined at the first end; and the door cover is movably arranged at the first end.

In some implementations, the first opening faces the first end when the aerosol generation apparatus is received in the receiving cavity.

In some implementations, the charging apparatus is configured to enable the aerosol generation apparatus received in the receiving cavity to bias the second end when the door cover is at the second position.

In some implementations, the aerosol generation apparatus includes a first magnetic member.

The door cover is provided with:
a second magnetic member, configured to be magnetically repelled from the first magnetic member when the door cover is at the second position, to enable the aerosol generation apparatus to bias the second end.

In some implementations, the second magnetic member and the first magnetic member of the aerosol generation apparatus are substantially aligned along the length direction of the charging apparatus when the door cover is at the second position.

In some implementations, the charging apparatus includes:
a first side and a second side that face away from each other along a width direction.

The receiving cavity is arranged close to the second side.

The first magnetic member is positioned away from the second side when the aerosol generation apparatus is received in the receiving cavity.

In some implementations, the charging apparatus further includes a third magnetic member.

The door cover is provided with:
a fourth magnetic member, configured to magnetically attract the third magnetic member when the door cover is at the first position, to maintain the door cover at the first position; and/or
a fifth magnetic member, configured to magnetically attract the third magnetic member when the door cover is at the second position, to maintain the door cover at the second position.

In some implementations, the door cover can further be selectively configured at a third position. The door cover at least partially closes the second opening and at least partially covers the first opening at the third position, to prevent the aerosol generation apparatus from being received in or removed from the receiving cavity through the second opening, and prevent the aerosol generation apparatus in the receiving cavity from receiving the aerosol generating article through the first opening.

In some implementations, the second position is arranged between the first position and the third position.

In some implementations, the door cover partially closes the second opening at the second position; and/or
the door cover substantially completely closes the second opening at the third position.

In some implementations, the charging apparatus further includes a third magnetic member.

The door cover is provided with:
a sixth magnetic member, configured to be magnetically repelled from the third magnetic member when the door cover is at the third position, to maintain the door cover at the third position.

In some implementations, the charging apparatus includes:
a first side and a second side that face away from each other along a width direction.

The receiving cavity is arranged close to the second side.

When the door cover is at the third position, the sixth magnetic member is closer to the second side than the third magnetic member is.

In some implementations, the aerosol generation apparatus includes a protrusion that is exposed or extends out of the receiving cavity when the aerosol generation apparatus is received in the receiving cavity. A user can actuate the protrusion during use, to remove the aerosol generation apparatus from the receiving cavity.

In some implementations, the charging apparatus includes:
a first side and a second side that face away from each other along a width direction.

The receiving cavity is arranged close to the second side, and a third opening located on the second side is defined for the receiving cavity. The protrusion of the aerosol generation apparatus is exposed or extends out of the receiving cavity through the third opening when the aerosol generation apparatus is received in the receiving cavity.

In some implementations, the aerosol generation apparatus includes an outer side surface surrounding the aerosol generation apparatus along a circumferential direction. The outer side surface includes:
a first surface part and a second surface part.

The first surface part is curved, and the second surface part is substantially flat; or a curvature or a curvature degree of the second surface part is less than that of the first surface part.

In some implementations, when the aerosol generation apparatus is received in the receiving cavity, the first surface part is substantially accommodated or hidden in the receiving cavity, and the second surface part is substantially exposed or extends out of the receiving cavity.

In some implementations, when the aerosol generation apparatus is received and charged in the receiving cavity of the charging apparatus, the aerosol generation apparatus is configured to be capable of heating, in response to an operation or an input of a user, the aerosol generating article received through the first opening.

In some implementations, the aerosol generation apparatus includes:
a heater, configured to heat the aerosol generating article;
a chargeable first battery cell, configured to at least supply power to the heater; and
a circuit, configured to be capable of simultaneously charging the first battery cell by using a part of electric power provided by the charging apparatus, and outputting a part of the electric power provided by the charging apparatus to the heater, to heat the aerosol generating article.

In some implementations, the aerosol generation apparatus is configured to be capable of receiving electric power of the charging apparatus intermittently or in pulses for charging; and the aerosol generation apparatus is configured to heat the aerosol generating article at an intermission or between adjacent pulses of receiving the electric power of the charging apparatus.

In some implementations, when the aerosol generation apparatus is received and charged in the receiving cavity of the charging apparatus, the aerosol generation apparatus is configured to be capable of pausing or interrupting charging in response to an operation or an input of a user and heating the aerosol generating article received through the first opening, and resuming charging until heating ends.

Another embodiment of this application further provides an electric system, including:
an aerosol generation apparatus, configured to heat an aerosol generating article to generate aerosol, where the aerosol generation apparatus includes a first opening, to receive the aerosol generating article; and
a charging apparatus, configured to charge the aerosol generation apparatus, where the charging apparatus includes a receiving cavity, and the aerosol generation apparatus is detachably received in the receiving cavity for charging.

The charging apparatus is constructed to be selectively configured among a first configuration, a second configuration, and a third configuration.

When the charging apparatus is in the first configuration, the aerosol generation apparatus is allowed to be received in the receiving cavity or removed from the receiving cavity.

When the charging apparatus is in the second configuration, the aerosol generation apparatus received in the receiving cavity is prevented from being removed from the receiving cavity, and the aerosol generating article is allowed to be received in the aerosol generation apparatus through the first opening for heating.

When the charging apparatus is in the third configuration, the aerosol generation apparatus received in the receiving cavity is prevented from being removed from the receiving cavity, and the aerosol generation apparatus in the receiving cavity is prevented from receiving the aerosol generating article through the first opening.

Another embodiment of this application further provides an electric system, including:
an aerosol generation apparatus, configured to heat an aerosol generating article to generate aerosol, where the aerosol generation apparatus includes a first opening, to receive the aerosol generating article; and
a charging apparatus, configured to charge the aerosol generation apparatus.

The charging apparatus includes:
a receiving cavity, configured to receive the aerosol generation apparatus, where a second opening is defined for the receiving cavity, and the aerosol generation apparatus can be detachably received in the receiving cavity through the second opening.

The charging apparatus is constructed to be selectively configured between a first configuration and a second configuration.

When the charging apparatus is in the first configuration, the second opening is opened, to allow the aerosol generation apparatus to be received in the receiving cavity or removed from the receiving cavity through the second opening.

When the charging apparatus is in the second configuration, the second opening is at least partially closed, and the first opening is avoided or exposed, to prevent the aerosol generation apparatus received in the receiving cavity from being removed through the second opening, and allow the aerosol generating article to be received in the aerosol generation apparatus through the first opening.

Another embodiment of this application further provides an electric system, including:
an aerosol generation apparatus, configured to heat an aerosol generating article to generate aerosol, where the aerosol generation apparatus includes a first opening, to receive the aerosol generating article; and
a charging apparatus, configured to charge the aerosol generation apparatus.

The charging apparatus includes:
a receiving cavity, configured to receive the aerosol generation apparatus, where a second opening is defined for the receiving cavity, and the aerosol generation apparatus can be detachably received in the receiving cavity through the second opening; and
a door cover that can be selectively configured among a first position, a second position, and a third position.

The door cover opens the second opening at the first position, to allow the aerosol generation apparatus to be detachably received in the receiving cavity through the second opening.

The door cover at least partially closes the second opening at the second position, and avoids or exposes the first opening, to prevent the aerosol generation apparatus received in the receiving cavity from being removed through the second opening, and allow the aerosol generating article to be received in the aerosol generation apparatus through the first opening.

The door cover at least partially closes the second opening at the third position, and closes the first opening, to prevent the aerosol generation apparatus received in the receiving cavity from being removed through the second opening, and prevent the aerosol generation apparatus in the receiving cavity from receiving the aerosol generating article through the first opening.

Another embodiment of this application further provides a charging apparatus, configured to charge an aerosol generation apparatus. The aerosol generation apparatus is configured to receive an aerosol generating article and heat the aerosol generating article to generate aerosol. The charging apparatus includes:
a receiving cavity, where the aerosol generation apparatus is detachably received in the receiving cavity for charging.

The charging apparatus is constructed to be selectively configured among a first configuration, a second configuration, and a third configuration.

When the charging apparatus is in the first configuration, the aerosol generation apparatus is allowed to be received in the receiving cavity or removed from the receiving cavity.

When the charging apparatus is in the second configuration, the aerosol generation apparatus received in the receiving cavity is prevented from being removed from the receiving cavity, and the aerosol generating article is allowed to be received in the aerosol generation apparatus for heating.

When the charging apparatus is in the third configuration, the aerosol generation apparatus received in the receiving cavity is prevented from being removed from the receiving cavity, and the aerosol generation apparatus in the receiving cavity is prevented from receiving the aerosol generating article.

Another embodiment of this application further provides a charging apparatus, configured to charge an aerosol generation apparatus. The aerosol generation apparatus includes a first opening, to receive an aerosol generating article. The charging apparatus includes:
a receiving cavity, configured to at least partially receive the aerosol generation apparatus; and
a second opening, where the aerosol generation apparatus can be detachably received in the receiving cavity through the second opening during use.

The charging apparatus is constructed to be selectively configured between a first configuration and a second configuration.

When the charging apparatus is in the first configuration, the second opening is opened, to allow the aerosol generation apparatus to be received in the receiving cavity or removed from the receiving cavity through the second opening.

When the charging apparatus is in the second configuration, the second opening is at least partially closed, and the first opening is avoided or exposed, to prevent the aerosol generation apparatus received in the receiving cavity from being removed through the second opening, and allow the aerosol generating article to be received in the aerosol generation apparatus through the first opening.

Another embodiment of this application further provides a charging apparatus, configured to charge an aerosol generation apparatus. The aerosol generation apparatus includes a first opening, to receive an aerosol generating article. The charging apparatus includes:
a receiving cavity, configured to receive the aerosol generation apparatus;
a second opening, where the aerosol generation apparatus can be detachably received in the receiving cavity through the second opening; and
a door cover that can be selectively configured between a first position and a second position.

The door cover opens the second opening at the first position, to allow the aerosol generation apparatus to be detachably received in the receiving cavity through the second opening.

The door cover at least partially closes the second opening at the second position, and avoids or exposes the first opening, to prevent the aerosol generation apparatus received in the receiving cavity from being removed through the second opening, and allow the aerosol generating article to be received in the aerosol generation apparatus through the first opening.

In some implementations, the door cover is arranged to be movable between the first position and the second position, to change a configuration between the first position and the second position.

In some implementations, the movement includes at least one of a linear movement or a rotational movement.

In some embodiments, the charging apparatus includes:
a first end and a second end that face away from each other along a length direction.

The second opening is defined at the first end.

The door cover is movably arranged at the first end.

In some implementations, the charging apparatus is configured to enable the aerosol generation apparatus received in the receiving cavity to bias the second end when the door cover is at the second position.

In some implementations, the aerosol generation apparatus includes a first magnetic member.

The door cover is provided with:
a second magnetic member, configured to be magnetically repelled from the first magnetic member when the door cover is at the second position, to enable the aerosol generation apparatus to bias the second end.

In some implementations, the second magnetic member and the first magnetic member are substantially aligned along the length direction of the charging apparatus when the door cover is at the second position.

In some implementations, the charging apparatus includes:
a first side and a second side that face away from each other along a width direction.

The receiving cavity is arranged close to the second side.

The first magnetic member is positioned away from the second side when the aerosol generation apparatus is received in the receiving cavity.

In some implementations, the charging apparatus further includes a third magnetic member.

The door cover is provided with:
a fourth magnetic member, configured to magnetically attract the third magnetic member when the door cover is at the first position, to maintain the door cover at the first position; and/or
a fifth magnetic member, configured to magnetically attract the third magnetic member when the door cover is at the second position, to maintain the door cover at the second position.

In some implementations, the door cover can further be selectively configured at a third position. The door cover at least partially closes the second opening and at least partially closes the first opening at the third position, to prevent the aerosol generation apparatus from being received in or removed from the receiving cavity through the second opening, and prevent the aerosol generation apparatus in the receiving cavity from receiving the aerosol generating article through the first opening.

In some implementations, the second position is arranged between the first position and the third position.

In some implementations, the door cover partially closes the second opening at the second position; and/or
the door cover substantially completely closes the second opening at the third position.

In some implementations, the charging apparatus further includes a third magnetic member.

The door cover is provided with:
a sixth magnetic member, configured to be magnetically repelled from the third magnetic member when the door cover is at the third position, to maintain the door cover at the third position.

In some implementations, the charging apparatus includes:
a first side and a second side that face away from each other along a width direction.

The receiving cavity is arranged close to the second side.

When the door cover is at the third position, the sixth magnetic member is closer to the second side than the third magnetic member is.

Another embodiment of this application further provides an aerosol generation apparatus, configured to heat an aerosol generating article to generate aerosol. The aerosol generation apparatus includes:
a chargeable battery cell;
a charging port, where the battery cell can be charged by inputting electric power to the charging port;
a first opening, configured to receive the aerosol generating article; and
a circuit, configured to be capable of heating, in response to an operation or an input of a user when the battery cell is charged through the charging port, the aerosol generating article received through the first opening.

In some implementations, the aerosol generation apparatus includes:
a heater, configured to heat the aerosol generating article.

The circuit is configured to be capable of simultaneously charging the battery cell by using a part of the electric power inputted through the charging port, and outputting a part of the electric power inputted through the charging port to the heater, to heat the aerosol generating article.

In some implementations, the circuit is configured to be capable of charging the battery cell intermittently or in pulses by using the electric power inputted through the charging port; and the circuit is configured to enable the heater to heat the aerosol generating article at an intermission or between adjacent pulses.

In some implementations, the circuit is configured to be capable of pausing or interrupting charging of the battery cell in response to an operation or an input of a user and heating the aerosol generating article received through the first opening, and resuming charging until heating ends.

Another embodiment of this application further provides an electric system, including:
an aerosol generation apparatus, configured to heat an aerosol generating article to generate aerosol, where the aerosol generation apparatus includes a first opening, to receive the aerosol generating article; and
a charging apparatus, configured to charge the aerosol generation apparatus.

The charging apparatus includes:
a receiving cavity, configured to receive the aerosol generation apparatus, where a second opening is defined for the receiving cavity, and the aerosol generation apparatus can be detachably received in the receiving cavity through the second opening;
an elastic electrical contact that can be selectively actuated between an extended state and a compressed state and biased to return to the extended state, where the elastic electrical contact is at least partially exposed in the receiving cavity, to be configured to output electric power to the aerosol generation apparatus received in the receiving cavity; and
a door cover that can be selectively configured between a first position and a second position.

The door cover opens the second opening at the first position, to allow the aerosol generation apparatus to be detachably received in the receiving cavity through the second opening.

The door cover at least partially closes the second opening at the second position, and partially abuts against or presses against the aerosol generation apparatus received in the receiving cavity, to enable the aerosol generation apparatus to press against the elastic electrical contact to the compressed state, and establish a conductive connection to the elastic electrical contact.

The door cover avoids the first opening at the second position.

In some implementations, when the door cover is moved from the second position to the first position, the elastic electrical contact is configured to be capable of being actuated from the compressed state to the extended state, to at least partially push or pop up the second opening through which the aerosol generation apparatus is received in the receiving cavity.

In some implementations, the elastic electrical contact includes at least one conductive elastic pin.

In some implementations, the charging apparatus further includes:
a bias mechanism, configured to enable the aerosol generation apparatus to bias the elastic electrical contact to the compressed state when the door cover is at the second position.

In some embodiments, the bias mechanism includes:
a first magnetic member, arranged on the aerosol generation apparatus; and
a second magnetic member, arranged on the door cover, and configured to be magnetically repelled from the first magnetic member when the door cover is at the second position, to enable, through magnetic repelling, the aerosol generation apparatus to bias the elastic electrical contact to the compressed state.

In some embodiments, the bias mechanism includes a spring.

In some embodiments, the door cover can further be selectively configured at a third position.

The door cover simultaneously closes the second opening and the first opening at the third position, and the door cover at least partially abuts against or presses against, at the third position, the aerosol generation apparatus received in the receiving cavity, to enable the aerosol generation apparatus to press against the elastic electrical contact to the compressed state, and establish a conductive connection to the elastic electrical contact.

Another embodiment of this application further provides an electric system, including:
an aerosol generation apparatus, configured to heat an aerosol generating article to generate aerosol, where the aerosol generation apparatus includes a first opening, to receive the aerosol generating article; and
a charging apparatus, configured to charge the aerosol generation apparatus.

The charging apparatus includes:
a receiving cavity, configured to receive the aerosol generation apparatus, where a second opening is defined for the receiving cavity, and the aerosol generation apparatus can be detachably received in the receiving cavity through the second opening; and
an elastic electrical contact that can be selectively actuated between an extended state and a compressed state and biased to return to the extended state, where the elastic electrical contact is at least partially exposed in the receiving cavity, to be configured to output electric power to the aerosol generation apparatus received in the receiving cavity.

The charging apparatus is constructed to be selectively configured between a first configuration and a second configuration.

When the charging apparatus is in the first configuration, the second opening is opened, to allow the aerosol generation apparatus to be received in the receiving cavity or removed from the receiving cavity through the second opening.

When the charging apparatus is in the second configuration, the second opening is at least partially closed, and the aerosol generation apparatus received in the receiving cavity is partially abutted or pressed, to enable the aerosol generation apparatus to at least partially press against the elastic electrical contact to the compressed state, and establish a conductive connection to the elastic electrical contact.

When the charging apparatus is in the second configuration, the first opening is avoided or exposed.

In some implementations, the charging apparatus can further be selectively configured at a third position.

The charging apparatus simultaneously closes the second opening and the first opening at the third position, and the charging apparatus at least partially abuts against or presses against, at the third position, the aerosol generation apparatus received in the receiving cavity, to enable the aerosol generation apparatus to press against the elastic electrical contact to the compressed state, and establish a conductive connection to the elastic electrical contact.

Another embodiment of this application further provides a charging apparatus, configured to charge an aerosol generation apparatus. The aerosol generation apparatus includes a first opening, to receive an aerosol generating article. The charging apparatus includes:
a receiving cavity, configured to at least partially receive the aerosol generation apparatus;
a second opening, where the aerosol generation apparatus can be detachably received in the receiving cavity through the second opening during use; and
an elastic electrical contact that can be selectively actuated between an extended state and a compressed state and biased to return to the extended state, where the elastic electrical contact is at least partially exposed in the receiving cavity, to be configured to output electric power to the aerosol generation apparatus received in the receiving cavity.

The charging apparatus is constructed to be selectively configured between a first configuration and a second configuration.

When the charging apparatus is in the first configuration, the second opening is opened, to allow the aerosol generation apparatus to be received in the receiving cavity or removed from the receiving cavity through the second opening.

When the charging apparatus is in the second configuration, the second opening is at least partially closed, and the aerosol generation apparatus received in the receiving cavity is partially abutted or pressed, to enable the aerosol generation apparatus to at least partially press against the elastic electrical contact to the compressed state, and establish a conductive connection to the elastic electrical contact.

When the charging apparatus is in the second configuration, the first opening is avoided or exposed.

Another embodiment of this application further provides a charging apparatus, configured to charge an aerosol generation apparatus. The aerosol generation apparatus includes a first opening, to receive an aerosol generating article. The charging apparatus includes:
a receiving cavity, configured to at least partially receive the aerosol generation apparatus;
a second opening, where the aerosol generation apparatus can be detachably received in the receiving cavity through the second opening during use;
an elastic electrical contact that can be selectively actuated between an extended state and a compressed state and biased to return to the extended state, where the elastic electrical contact is at least partially exposed in the receiving cavity, to be configured to output electric power to the aerosol generation apparatus received in the receiving cavity; and
a door cover that can be selectively configured between a first position and a second position.

The door cover opens the second opening at the first position, to allow the aerosol generation apparatus to be detachably received in the receiving cavity through the second opening.

The door cover at least partially closes the second opening at the second position, and partially abuts against or presses against the aerosol generation apparatus received in the receiving cavity, to enable the aerosol generation apparatus to press against the elastic electrical contact to the compressed state, and establish a conductive connection to the elastic electrical contact.

The door cover avoids the first opening at the second position.

**In** the foregoing electric system, when the charging apparatus charges the aerosol generation apparatus, the aerosol generation apparatus can further receive the aerosol generating article and heat the aerosol generating article for a user to inhale.

### BRIEF DESCRIPTION OF THE DRAWINGS

One or more embodiments are exemplarily described with reference to the corresponding figures in the accompanying drawings, and the descriptions do not constitute a limitation to the embodiments. Components in the accompanying drawings that have the same reference numerals are represented as similar components, and unless otherwise particularly stated, the figures in the accompanying drawings are not drawn to scale.
FIG. 1 is a schematic diagram of a position or a state of an electric system according to an embodiment;
FIG. 2 is a schematic diagram of a state in which an aerosol generation apparatus is removed from a charging apparatus in FIG. 1;
FIG. 3 is a schematic diagram of a cross section of an angle of view of the charging apparatus in FIG. 2;
FIG. 4 is a schematic diagram of a cross section of another angle of view of the charging apparatus in FIG. 2;
FIG. 5 is a schematic diagram of a cross section of an angle of view of the aerosol generation apparatus in FIG. 2;
FIG. 6 is a schematic diagram in which a door cover in the electric system in FIG. 1 moves to another position or state; and
FIG. 7 is a schematic diagram in which the door cover in the electric system in FIG. 1 moves to another position or state.

### DETAILED DESCRIPTION

For ease of understanding of this application, this application is described below in more detail with reference to the accompanying drawings and specific implementations.

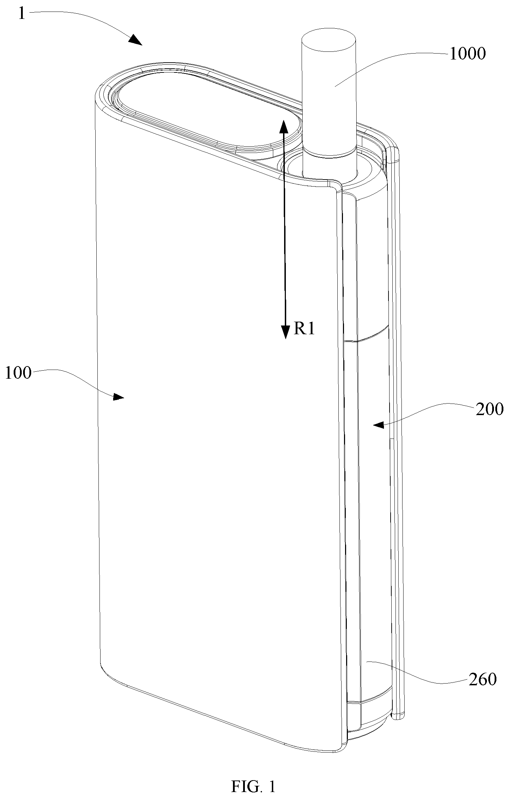

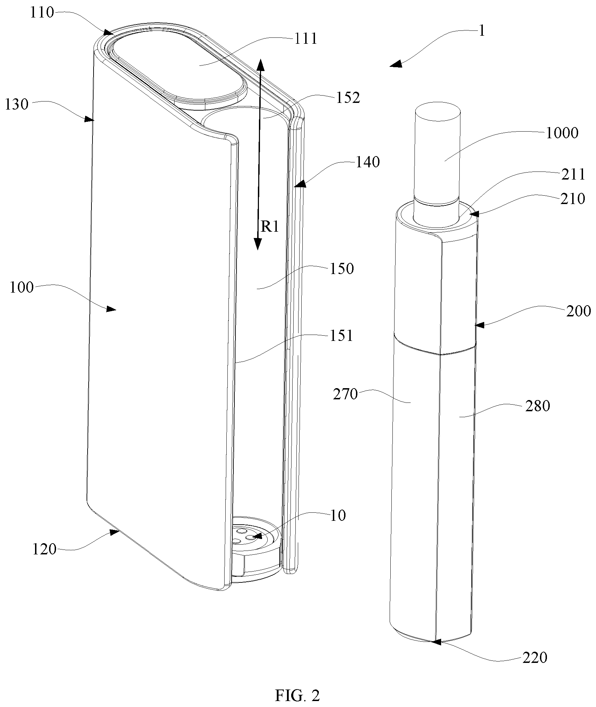

An embodiment of this application provides an electric system 1. Referring to FIG. 1 and FIG. 2, the electric system 1 includes:

an aerosol generation apparatus 200 and a charging apparatus 100 configured to charge the aerosol generation apparatus 200. The aerosol generation apparatus 200 is configured to generate aerosol.

Specifically, in an embodiment, the aerosol generation apparatus 200 at least partially receives a solid aerosol generating article 1000, for example, a cigarette, and heat the aerosol generating article 1000, so that at least a part of volatile components in the aerosol generating article 1000 are volatilized and released, to form aerosol that can be inhaled. Further, in an optional implementation, the aerosol generating article 1000 is preferably a material that releases a volatile compound from a substrate when being heated and that includes tobacco, or may be a non-tobacco material that is suitable for being electrically heated to produce smoke after being heated. The aerosol generating article 1000 is preferably a solid substrate, and may include one or more of powers, particles, fragments, strips, or sheets of one or more of vanilla leaves, tobacco leaves, homogenized tobacco, and expanded tobacco. Alternatively, the solid substrate may include an additional tobacco or non-tobacco volatile tobacco aroma compound that is released when the substrate is heated.

Alternatively, in some other variant embodiments, the aerosol generation apparatus 200 heats a liquid aerosol precursor to vaporize the liquid aerosol precursor, so as to generate aerosol for inhaling. For example, in Chinese Patent Application No. CN215684777U, the applicant provides details about a configuration of an aerosol generation apparatus 200 that heats a liquid aerosol precursor to generate aerosol. Specifically, a liquid storage cavity that stores the liquid aerosol precursor is disposed in the apparatus, and the liquid aerosol precursor is drawn and delivered, by using a porous body or a capillary element, to a heating element for heating and vaporization. The entire document of the aerosol generation apparatus 200 that heats the liquid aerosol precursor is included in this specification in a reference manner.

Further, referring to FIG. 1 and FIG. 2, the charging apparatus 100 is constructed into a generally square shape. During use, the aerosol generation apparatus 200 is detachably received in the charging apparatus 100 for charging.

Further, as shown in FIG. 1 and FIG. 2, the charging apparatus 100 is basically constructed into a square shape. In addition, the charging apparatus 100 has a length, a width, and a thickness. In addition, the length of the charging apparatus 100 is greater than the width, and the width is greater than the thickness. The charging apparatus 100 includes:
a first end 110 and a second end 120 that face away from each other along a length direction;
a first side 130 and a second side 140 that face away from each other along a width direction; and
a receiving cavity 150, configured to at least partially receive and accommodate the aerosol generation apparatus 200.

The receiving cavity 150 is arranged to extend along the length direction of the charging apparatus 100 and is close to or defines the second side 140. In addition, an opening 152 is defined for the receiving cavity 150 at the first end 110. Therefore, as shown by an arrow R1 in FIG. 2, during use, the aerosol generation apparatus 200 can be received in or removed from the receiving cavity 150 through the opening 152 of the receiving cavity 150 at the first end 110.

Further, the receiving cavity 150 includes an opening or a notch 151 extending along the length direction on the second side 140. Further, when the aerosol generation apparatus 200 is received in the receiving cavity 150, at least a part of the aerosol generation apparatus 200 protrudes out, extends out, or is exposed out of the receiving cavity 150. For example, in FIG. 1, the aerosol generation apparatus 200 includes a protrusion 260 that protrudes or extends out of the receiving cavity 150. Further, during use, a user uses a finger to abut against, press against, or push the protrusion 260 to further actuate the aerosol generation apparatus 200, so as to remove the aerosol generation apparatus 200 from the receiving cavity 150. For example, during use, a user uses a finger to abut against, press against, or push the protrusion 260 to move along the length direction. A width of the opening or notch 151 is less than a maximum width, a maximum thickness, or a maximum radial width of the aerosol generation apparatus 200, so that the aerosol generation apparatus 200 cannot be received in or removed from the receiving cavity 150 through the opening or notch 151 during use, but can only be received in or removed from the receiving cavity 150 through the opening 152 of the receiving cavity 150 at the first end 110.

Certainly, as shown in FIG. 1 and FIG. 2, an end part that is of the receiving cavity 150 of the charging apparatus 100 and that is close to the second end 120 is closed. When being received in the receiving cavity 150, the aerosol generation apparatus 200 can stop the end part that is of the receiving cavity 150 and that is close to the second end 120.

Further, referring to FIG. 1 and FIG. 2, an outer side surface of the aerosol generation apparatus 200 includes a smooth arc-shaped surface 270 or a curved arc-shaped surface 270, and a straight or flat surface 280 or a plane 280. The arc-shaped surface 270 and the straight or flat surface 280 jointly define the closed outer side surface surrounding the aerosol generation apparatus 200 along a circumferential direction. In addition, when the aerosol generation apparatus 200 is received in the receiving cavity 150 of the charging apparatus 100, the arc-shaped surface 270 is basically accommodated in and shielded by the charging apparatus 100, and the straight or flat surface 280 is exposed or protrudes out of the opening or notch 151 of the receiving cavity 150.

In addition, during implementation, the opening or notch 151 extends to the first end 110, so that the opening or notch 151 and the opening 152 communicate with each other.

Alternatively, in some other variant implementations, the surface 280 is also a curved arc-shaped surface. In addition, a curvature or a curvature degree of the surface 280 is less than that of the surface 270.

Further, referring to FIG. 2 to FIG. 4, the charging apparatus 100 further includes:
a battery cell 101, arranged close to the first side end 130; and
a circuit board 102, arranged close to the first side end 130.

Certainly, the battery cell 101 and the circuit board 102 are electrically connected to each other.

In addition, the battery cell 101 and the circuit board 102 are sequentially arranged along the length direction of the charging apparatus 100, or the battery cell 101 and the circuit board 102 are opposite along the length direction of the charging apparatus 100. The battery cell 101 and the circuit board 102 basically have close width dimensions. The battery cell 101 is arranged close to the first end 110, and the circuit board 102 is arranged close to the second end 120.

In addition, during construction, a sum of dimensions of the battery cell 101 and the circuit board 102 along the length direction is basically equal to a length dimension of the receiving cavity 150.

In addition, the circuit board 102 is arranged parallel to the length direction and/or the width direction of the charging apparatus 100. Alternatively, the circuit board 102 is parallel to a plane defined by the length direction and the width direction of the charging apparatus 100.

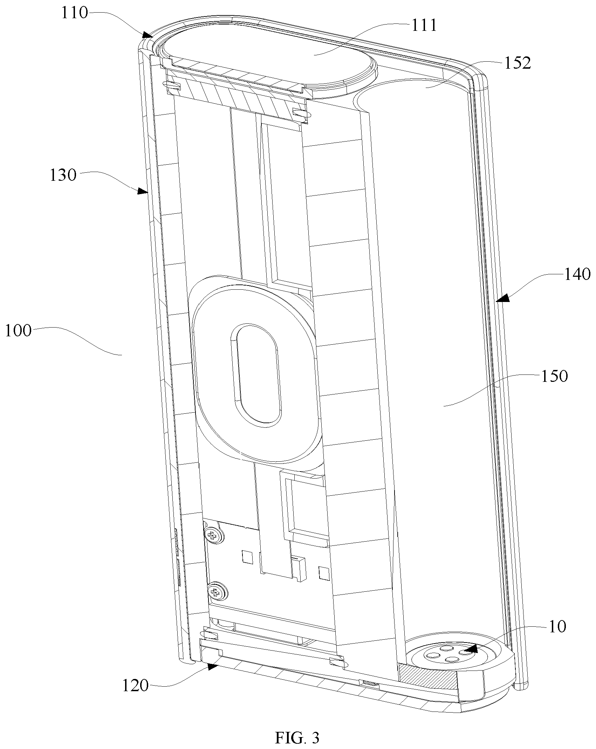

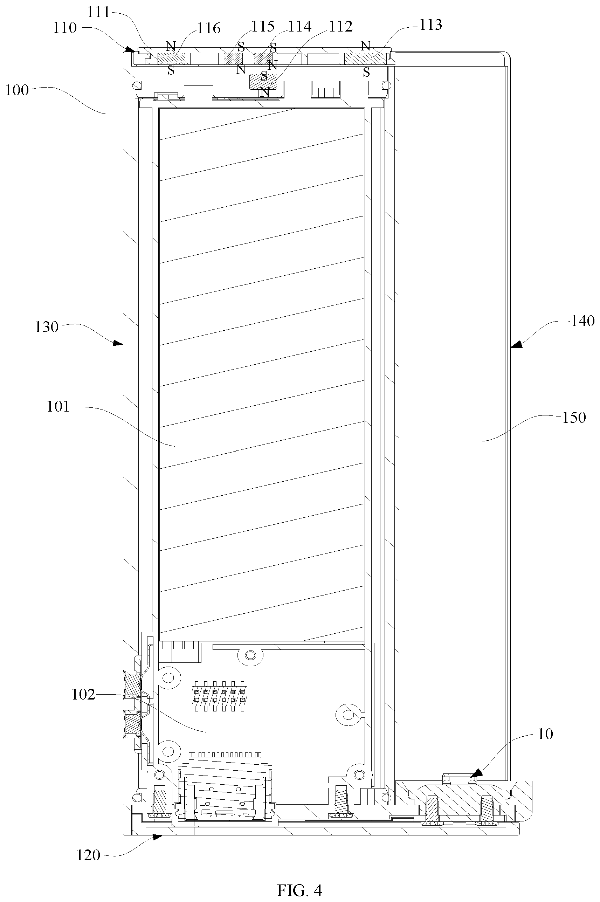

Further, referring to FIG. 3 and FIG. 4, an elastic electrical contact 10 is further disposed in the charging apparatus 100, and is arranged close to the second end 120. The elastic electrical contact 10 is at least partially located in the receiving cavity 150 and is arranged away from the opening 152. In addition, the elastic electrical contact 10 is opposite to the receiving cavity 150 along the length direction of the charging apparatus 100. In addition, at least a part of the elastic electrical contact 10 is bare or extends into the receiving cavity 150 after being assembled. Therefore, when the aerosol generation apparatus 200 is received in the receiving cavity 150, the aerosol generation apparatus 200 is in conduction with the elastic electrical contact 10, so that the battery cell 101 charges the aerosol generation apparatus 200.

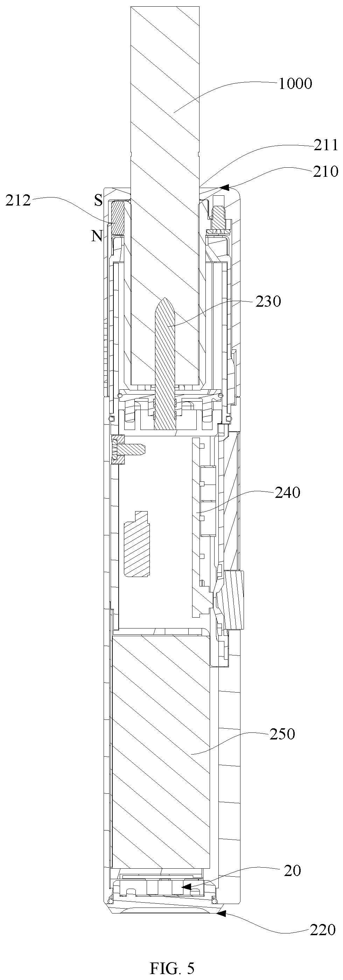

Correspondingly, during implementation, as shown in FIG. 5, the aerosol generation apparatus 200 includes a charging port 20. When the aerosol generation apparatus 200 is received in the receiving cavity 150 of the charging apparatus 100, the charging port 20 is configured to cooperate with the elastic electrical contact 10 to be in conduction with the elastic electrical contact 10, so as to charge the aerosol generation apparatus 200.

In some implementations, the charging port 20 is generally a USB charging port, for example, a USB pin interface, a USB type-C electrical port, or a power input port that can be used in a connector for charging a battery cell 250 or that is defined by a device. During use, electric power is inputted into the charging port 20 to charge the battery cell 250.

Specifically, for structures of the aerosol generation apparatus 200 and the charging port 20 in an embodiment, refer to FIG. 5. The aerosol generation apparatus 200 includes:
a near end 210 and a far end 220 that face away from each other along the length direction. In this embodiment, an opening 211 is defined at the near end 210. During use, the solid aerosol generating article 1000 is detachably received in the aerosol generation apparatus 200 through the opening 211.

In addition, the aerosol generation apparatus 200 further includes:
a heater 230, which is, for example, in a shape of a pin, a needle, a sheet, a column, a stick, a rod, a pipe, or a tube, to be configured to be inserted into the aerosol generating article 1000 or surrounded outside the aerosol generating article 1000 for heating. In addition, during implementation, the heater 230 is one or more of a resistive heater, an infrared heater, or an electromagnetic induction heater.

In addition, the aerosol generation apparatus 200 further includes:
a chargeable battery cell 250, configured to provide electric power for the heater 230; and
a circuit board 240, provided with a circuit and located between the battery cell 250 and the heater 230, to guide a current between the battery cell 250 and the heater 230. Alternatively, the circuit of the circuit board 240 is configured to control the electric power provided by the battery cell 250 for the heater 230, to maintain a heating temperature of the heater 30 at a target temperature.

In addition, the charging port 20 is close to or located at the far end 220. In addition, the charging port 20 and the battery cell 250 are conductively connected to each other.

In addition, in some implementations, the elastic electrical contact 10 of the charging apparatus 100 includes a conductive elastic pin, a conductive spring, an elastic electrode, or the like, so that the elastic electrical contact 10 can be elastically configured between a compressed state and an extended state. In addition, during implementation, when the aerosol generation apparatus 200 is received in the receiving cavity 150 for charging, the door cover 111 presses against or squeezes the aerosol generation apparatus 200, so that the elastic electrical contact 10 is at least partially compressed by the aerosol generation apparatus 200. After the aerosol generation apparatus 200 is removed from the receiving cavity 150, the elastic electrical contact 10 restores the extended state.

Alternatively, in some other embodiments, the charging port 20 of the aerosol generation apparatus 200 includes:
at least one elastic conductive element, which is, for example, a conductive element such as an electrical contact or a conductive elastic pin.

Further, when the aerosol generation apparatus 200 is received in the receiving cavity 150 for charging, the at least one conductive element of the elastic electrical contact 10 and/or the at least one conductive element of the charging port 20 are/is elastically compressed, to help the at least one conductive element of the elastic electrical contact 10 and/or the at least one conductive element of the charging port 20 be stably in conductive contact.

Further, referring to FIG. 4 and FIG. 5 to FIG. 7, a door cover 111 that can linearly move along the width direction is further disposed at the first end 110 of the charging apparatus 100. The door cover 111 can selectively cover or open the opening 152 of the receiving cavity 150 at the first end 110 through movement. During use, when the aerosol generation apparatus 200 is received in the receiving cavity 150 through the opening 152 of the receiving cavity 150 at the first end 110 and charged, the door cover 111 covers or closes the opening 152 of the receiving cavity 150 at the first end 110, to tightly compress or fasten the aerosol generation apparatus 200 in the receiving cavity 150 and prevent the aerosol generation apparatus 200 from being removed from the receiving cavity 150 through the opening 152. In addition, when the aerosol generation apparatus 200 needs to be removed, the door cover 111 is moved to open the opening 152, and a user pushes the aerosol generation apparatus 200 to remove the aerosol generation apparatus 200 through the opening 152.

Alternatively, in some other variant implementations, the door cover 111 may be arranged at the first end 110 of the charging apparatus 100 in a rotational manner. For example, the door cover 111 may be arranged in a rotational manner or a manner of rotating around a pin, so that the door cover 111 changes different position states through rotational movement or the like.

Further, referring to FIG. 4 and FIG. 5 to FIG. 7, the door cover 111 can move along the width direction and has a plurality of moving positions, to selectively completely open, partially open, or completely close the opening 152 of the receiving cavity 150 at the first end 110. Further, the charging apparatus 100 can be configured in different functional configuration states, and the configuration state of the charging apparatus 100 is changed by moving the door cover 111.

Specifically, FIG. 4 is a schematic diagram of a position at which or a state in which the door cover 111 completely opens the opening 152 at the first end. When the door cover 111 is at this position, the charging apparatus 100 is in a configuration state in which the aerosol generation apparatus 200 is allowed to be received or removed. At this position, the door cover 111 abuts against or is close to the first side 130. In addition, at this position, the door cover 111 is far away from the second side 140. In addition, at this position, the door cover 111 basically completely avoids the opening 152 of the receiving cavity 150 at the first end 110. In addition, when the door cover 111 is at this position, the aerosol generation apparatus 200 may be received in the receiving cavity 150 through the opening 152 of the receiving cavity 150 at the first end 110, or may be removed through the opening 152.

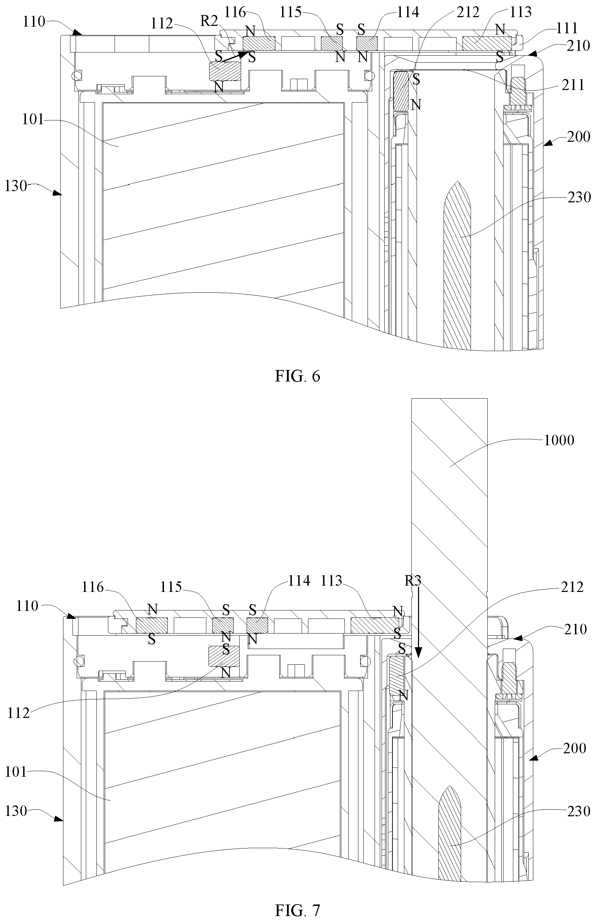

Specifically, FIG. 6 is a schematic diagram of a position at which or a state in which the door cover 111 completely closes or covers the opening 152 at the first end. When the door cover 111 is at this position, the charging apparatus 100 is in a configuration state in which the aerosol generation apparatus 200 is not allowed to be removed, and the aerosol generation apparatus 200 received in the charging apparatus 100 cannot receive and heat the aerosol generating article 1000. At this position, the door cover 111 abuts against or is close to the second side 140. In addition, at this position, the door cover 111 is far away from the first side 130. In addition, at this position, the door cover 111 basically completely covers or closes the opening 152 of the receiving cavity 150 at the first end 110. In addition, when the door cover 111 is at this position, the aerosol generation apparatus 200 located outside the charging apparatus 100 cannot be received in the receiving cavity 150. In addition, at this position, the door cover 111 can further prevent the aerosol generation apparatus 200 received in the receiving cavity 150 from being removed through the opening 152. In addition, at this position, the door cover 111 covers or closes the opening 211 of the aerosol generation apparatus 200 at the near end 210, to help prevent dirt and another foreign matter from entering the opening 211.

In addition, specifically, FIG. 7 is a schematic diagram of a position at which or a state in which the door cover 111 partially opens the opening 152 and partially covers the opening 152 at the first end. When the door cover 111 is at this position, the charging apparatus 100 is in a configuration state in which the aerosol generation apparatus 200 is not allowed to be removed, and the aerosol generation apparatus 200 received in the charging apparatus 100 is allowed to receive and heat the aerosol generating article 1000. At this position, a part of the door cover 111 abuts against the near end 210 of the aerosol generation apparatus 200, and basically completely avoids the opening 211 of the aerosol generation apparatus 200 at the near end 210, so that when the door cover 111 is at this position, the aerosol generating article 1000 can be received, through the opening 211, in the aerosol generation apparatus 200 for heating, or be removed from the aerosol generation apparatus 200 through the opening 211. In addition, when the door cover 111 is at this position, the charging apparatus 100 may charge the aerosol generation apparatus 200, and may simultaneously heat the aerosol generating article 1000.

In addition, in some implementations, when a charge level, power level, or voltage of the battery cell 250 of the aerosol generation apparatus 200 is lower than a predetermined charge level, power level, or voltage, a user can receive the aerosol generation apparatus 200 in the receiving cavity 150 of the charging apparatus 100 for charging. During charging, when the user still has a requirement for inhaling, the user may move the door cover 111 to the position at which or the state in which the receiving cavity 150 is partially covered in FIG. 7, so that the opening 211 of the aerosol generation apparatus 200 at the near end 210 is exposed. Then, the aerosol generating article 1000 is inserted into the aerosol generation apparatus 200 and heated for inhaling.

In addition, in the implementation shown in FIG. 7, when the user operates to turn on the aerosol generation apparatus 200 to heat the aerosol generating article 1000, the circuit of the circuit board 240 controls, so that electric power provided for the heater 30 is not provided by the battery cell 250, but is outputted by the battery cell 101 of the charging apparatus 100 and provided for the heater 30 by using the elastic electrical contact 10. In some implementations, when the user operates to turn on the aerosol generation apparatus 200 to heat the aerosol generating article 1000, the user may perform an operation or input by using a switch, a button, a touch screen, or the like that is of the aerosol generation apparatus 200 and that is exposed out of the receiving cavity 150

Alternatively, in the implementation shown in FIG. 7, when the user operates to turn on the aerosol generation apparatus 200 to heat the aerosol generating article 1000, the circuit of the circuit board 240 controls, so that the electric power outputted by the battery cell 101 by using the elastic electrical contact 10 is partially provided for the battery cell 250 to charge the battery cell, and is partially provided for the heater 30 to heat the heater 30. For example, in some specific implementations, two conductive paths are arranged on the circuit of the circuit board 240. A first path is located between the charging port 20 and the battery cell 250, to be configured to charge the battery cell 250 by using the electric power outputted by the battery cell 101 to the charging port 20. A second path is located between the charging port 20 and the heater 30, to be configured to provide, for the heater 30, the electric power outputted by the battery cell 101 to the charging port 20. Certainly, the foregoing two conductive paths may be selectively conductive or open.

Alternatively, in some implementations, the foregoing two conductive paths may be simultaneously conducted, so that the electric power outputted by the battery cell 101 can simultaneously charge the battery cell 250 and heat the heater 30.

Alternatively, in some implementations, the foregoing two conductive paths may be alternately conducted, so that the electric power inputted to the charging port 20 may alternately charge the battery cell 250 and heat the heater 30. In addition, charging of the battery cell 250 and heating of the heater 30 may be asynchronous.

Alternatively, in the implementation shown in FIG. 7, when the user operates or inputs control, to turn on the aerosol generation apparatus 200 to heat the aerosol generating article 1000, the circuit of the circuit board 240 is configured to be capable of pausing or interrupting, in response to an operation or an input of the user, charging of the battery cell 250, but providing, for the heater 30, the electric power outputted by the battery cell 101 to the charging port 20 by using the elastic electrical contact 10, to heat the aerosol generating article 1000. After the user completes inhaling or after the heater 30 is heated for preset duration, the electric power outputted by the battery cell 101 to the charging port 20 by using the elastic electrical contact 10 stops being provided for the heater 30, and is then switched or restored to charge the battery cell 250.

Alternatively, in the implementation shown in FIG. 7, when the user operates to turn on the aerosol generation apparatus 200 to heat the aerosol generating article 1000, the circuit of the circuit board 240 is configured to control to simultaneously enable the charging port 20 to charge the battery cell 250 and enable the battery cell 250 to output the electric power to the heater 30 to heat the aerosol generating article 1000.

Further, referring to FIG. 4 and FIG. 5 to FIG. 7, a third magnetic element 112 adjacent to or close to the first end 110 is disposed on the charging apparatus 100. In addition, magnetic poles of the third magnetic element 112 are arranged opposite to each other along a longitudinal direction of the charging apparatus 100. For example, in FIG. 5 to FIG. 7, a magnetic pole on a side of the third magnetic element 112 facing the first end 110 is an S pole, and a magnetic pole on the other side away from the first end 110 is an N pole.

Further, referring to FIG. 4 and FIG. 5 to FIG. 7, a first magnetic element 212 is disposed on a side of the aerosol generation apparatus 200 away from the straight or flat surface 280. The first magnetic element 212 is adjacent to, close to, or located at the near end 210. In addition, magnetic poles of the first magnetic element 212 are arranged opposite to each other along a longitudinal direction of the aerosol generation apparatus 200. For example, in FIG. 5 to FIG. 7, a magnetic pole on a side of the first magnetic element 212 facing the near end 210 is an S pole, and a magnetic pole on the other side away from the near end 210 is an N pole.

Further, referring to FIG. 4 and FIG. 5 to FIG. 7, a second magnetic element 113, a fourth magnetic element 114, a fifth magnetic element 115, and a sixth magnetic element 116 are disposed on the door cover 111. In addition, the second magnetic element 113, the fourth magnetic element 114, the fifth magnetic element 115, and the sixth magnetic element 116 are sequentially arranged along the width direction of the charging apparatus 100 and/or a length direction of the door cover 111. The fourth magnetic element 114, the fifth magnetic element 115, and the sixth magnetic element 116 are respectively configured to magnetically attract or be magnetically repelled from the third magnetic element 112, so that the door cover 111 can be stably maintained at a position when moved to different positions.

Specifically, when the door cover 111 is moved to the position at which or the state in which the opening 152 of the receiving cavity 150 is completely opened in FIG. 4, the fourth magnetic element 114 is aligned with the third magnetic element 112. In addition, when the door cover 111 is at this position, the fourth magnetic element 114 magnetically attracts the third magnetic element 112, so that the door cover 111 is maintained at the position at which the opening 152 of the receiving cavity 150 is completely opened. Therefore, in arrangement of magnetic poles of the fourth magnetic element 114, a side of the fourth magnetic element 114 facing or approaching the third magnetic element 112 is set to an N pole, and the other side away from the third magnetic element 112 is set to an S pole. In addition, when the door cover 111 is at the position shown in FIG. 4, the second magnetic element 113 and/or the fifth magnetic element 115 and/or the sixth magnetic element 116 are/is staggered from the third magnetic element 112. In addition, when the door cover 111 is moved to the position at which or the state in which the opening 152 is completely opened in FIG. 4, the second magnetic element 113 is located between the third magnetic element 112 and the receiving cavity 150 and/or the second side 140. In addition, the fifth magnetic element 115 and/or the sixth magnetic element 116 are/is located between the third magnetic element 112 and the first side 130.

In addition, when the door cover 111 is moved to the position at which or the state in which the opening 152 of the receiving cavity 150 is completely covered or closed in FIG. 6, the second magnetic element 113 and/or the fourth magnetic element 114 and/or the fifth magnetic element 115 and/or the sixth magnetic element 116 are staggered from the third magnetic element 112. In addition, when the door cover 111 is at this location, the second magnetic element 113 and/or the fourth magnetic element 114 and/or the fifth magnetic element 115 and/or the sixth magnetic element 116 are/is located between the third magnetic element 112 and the second side 140. In addition, when the door cover 111 is at this location, the fourth magnetic element 114 and/or the fifth magnetic element 115 and/or the sixth magnetic element 116 are/is located between the third magnetic element 112 and the receiving cavity 150. In addition, at least a part of the second magnetic element 113 is opposite to an exposure and/or the opening 152 of the receiving cavity 150. In addition, the fourth magnetic element 114 and/or the fifth magnetic element 115 and/or the sixth magnetic element 116 deviate from or avoid the opening 152 of the receiving cavity 150. In addition, when the door cover 111 is at this location, the sixth magnetic element 116 is closest to the third magnetic element 112. In addition, when the door cover 111 is at this location, the sixth magnetic element 116 is magnetically repelled from the third magnetic element 112, so that the door cover 111 biases toward the second side 140, and the door cover 111 is enabled to be stably maintained at the position at which the opening 152 of the receiving cavity 150 is covered or closed. For example, as shown in FIG. 6, in arrangement of magnetic poles of the sixth magnetic element 116, a side of the sixth magnetic element 116 facing or approaching the third magnetic element 112 is set to an S pole, and the other side away from the third magnetic element 112 is set to an N pole, so that the sixth magnetic element 116 is magnetically repelled from the third magnetic element 112. A repulsive force is as shown by an arrow R2 in FIG. 6.

In addition, when the door cover 111 is moved to the position at which or the state in which the opening 152 of the receiving cavity 150 is partially covered or partially closed in FIG. 7, the fifth magnetic element 115 is aligned with the third magnetic element 112. In addition, the second magnetic element 113 and/or the fourth magnetic element 114 and/or the sixth magnetic element 116 are/is staggered from the third magnetic element 112. In addition, when the door cover 111 is at this location, the fifth magnetic element 115 magnetically attracts the third magnetic element 112, so that the door cover 111 is stably maintained at the position at which or the state in which the opening 152 of the receiving cavity 150 is partially covered or partially closed. For example, as shown in FIG. 7, in arrangement of magnetic poles of the fifth magnetic element 115, a side of the fifth magnetic element 115 facing or approaching the third magnetic element 112 is set to an N pole, and the other side away from the third magnetic element 112 is set to an S pole, so that the fifth magnetic element 115 magnetically attracts the third magnetic element 112. In addition, when the door cover 111 is at this location, the sixth magnetic element 116 is located between the third magnetic element 112 and the first side 130, and the second magnetic element 113 and/or the fourth magnetic element 114 is located between the third magnetic element 112 and the second side 140. In addition, when the door cover 111 is at the position shown in FIG. 7, the second magnetic element 113 is opposite to or aligned with at least a part of the cavity 150 that is away from the second side 140.

Further, when the door cover 111 is moved to the position shown in FIG. 7, the door cover 111 partially covers or abuts against the near end 210 of the aerosol generation apparatus 200. In addition, a part that is of the aerosol generation apparatus 200 and that partially abuts against the door cover 111 is away from the second side 130 and/or an exposed part. Further, at least a part of the door cover 111 at the first end 110 stops the aerosol generation apparatus 200, to prevent the aerosol generation apparatus 200 from being removed.

In addition, when the door cover 111 is moved to the position shown in FIG. 7, at least a part of the second magnetic element 113 is close to and aligned with the first magnetic element 212 of the aerosol generation apparatus 200. In addition, the second magnetic element 113 is magnetically repelled from the first magnetic element 212. Further, when the door cover 111 is moved to the position shown in FIG. 7, as shown by an arrow R3 in FIG. 7, a repelling force between the second magnetic element 113 and the first magnetic element 212 can enable the aerosol generation apparatus 200 to bias toward the second end 120, so that the aerosol generation apparatus 200 is stably maintained in the receiving cavity 150, and the elastic electrical contact 10 including the conductive elastic pin and the charging port 20 can be stably in contact and conducted. For example, during implementation, arrangement of magnetic poles of the second magnetic element 113 is that a magnetic pole on a side facing or close to the receiving cavity 150 is an S pole, and a magnetic pole on the other side away from the receiving cavity 150 is an N pole. In some other implementations, the biasing may alternatively be implemented by replacing the magnetic repulsion with another bias mechanism such as a spring. For example, in some implementations, the another bias mechanism may include a linear spring or a torsional spring. The spring is disposed on the door cover 111, and applies, to the aerosol generation apparatus 200, an elastic pushing force toward the second end 120, so that the aerosol generation apparatus 200 biases toward the second end 120, and the elastic electrical contact 10 is pressed in a compressed state to form a conductive connection.

In addition, in the embodiments shown in FIG. 6 and FIG. 7, when the aerosol generation apparatus 200 is received in the receiving cavity 150, the elastic electrical contact 10 is at least partially compressed through bias setting of abutting or pressing of the door cover 111 against the aerosol generation apparatus 200 at the first end 110 and/or the magnetic repulsion, so that the elastic electrical contact 10 and the charging port 20 can be stably in contact and conducted. In addition, when the door cover 111 is moved to open the exposure 152, the elastic electrical contact 10 may resume or move from the compressed state toward the extended state, and provide a pushing force or an elastic force to push the aerosol generation apparatus 200 at least partially out of the exposure 152.

In addition, when the aerosol generation apparatus 200 is received and accommodated in the receiving cavity 150, the first magnetic element 212 is away from the opening or notch 151 of the receiving cavity 150.

It should be noted that, the specification of this application and the accompanying drawings thereof illustrate preferred embodiments of this application, but this application is not limited to the embodiments described in the specification. Further, a person of ordinary skill in the art may make improvements or variations according to the foregoing descriptions, and such improvements and variations shall all fall within the protection scope of the appended claims of this application.

## Claims

1. An electric system, comprising:
an aerosol generation apparatus, configured to heat an aerosol generating article to generate aerosol, wherein the aerosol generation apparatus comprises a first opening, to receive the aerosol generating article; and
a charging apparatus, configured to charge the aerosol generation apparatus, wherein
the charging apparatus comprises:
a receiving cavity, configured to receive the aerosol generation apparatus, wherein a second opening is defined for the receiving cavity, and the aerosol generation apparatus can be detachably received in the receiving cavity through the second opening; and
a door cover that can be selectively configured between a first position and a second position, wherein
the door cover opens the second opening at the first position, to allow the aerosol generation apparatus to be detachably received in the receiving cavity through the second opening; and
the door cover at least partially closes the second opening at the second position, and avoids or exposes the first opening, to prevent the aerosol generation apparatus received in the receiving cavity from being removed through the second opening, and allow the aerosol generating article to be received in the aerosol generation apparatus through the first opening.

2. The electric system according to claim 1, wherein the door cover is arranged to be movable between the first position and the second position, to change a configuration between the first position and the second position.

3. The electric system according to claim 2, wherein the movement comprises at least one of a linear movement or a rotational movement.

4. The electric system according to any one of claims 1 to 3, wherein:
the charging apparatus comprises a first end and a second end that face away from each other along a length direction;
the second opening is defined at the first end; and
the door cover is movably arranged at the first end.

5. The electric system according to claim 4, wherein the first opening faces the first end when the aerosol generation apparatus is received in the receiving cavity.

6. The electric system according to claim 4, wherein the charging apparatus is configured to enable the aerosol generation apparatus received in the receiving cavity to bias the second end when the door cover is at the second position.

7. The electric system according to claim 4, wherein the aerosol generation apparatus comprises a first magnetic member; and
the door cover is provided with:
a second magnetic member, configured to be magnetically repelled from the first magnetic member when the door cover is at the second position, to enable the aerosol generation apparatus to bias the second end.

8. The electric system according to claim 7, wherein the second magnetic member and the first magnetic member of the aerosol generation apparatus are substantially aligned along the length direction of the charging apparatus when the door cover is at the second position.

9. The electric system according to claim 7, wherein the charging apparatus comprises:
a first side and a second side that face away from each other along a width direction;
the receiving cavity is arranged close to the second side; and
the first magnetic member is positioned away from the second side when the aerosol generation apparatus is received in the receiving cavity.

10. The electric system according to any one of claims 1 to 3, wherein the charging apparatus further comprises a third magnetic member; and
the door cover is provided with:
a fourth magnetic member, configured to magnetically attract the third magnetic member when the door cover is at the first position, to maintain the door cover at the first position; and/or
a fifth magnetic member, configured to magnetically attract the third magnetic member when the door cover is at the second position, to maintain the door cover at the second position.

11. The electric system according to any one of claims 1 to 3, wherein the door cover can further be selectively configured at a third position; and
the door cover at least partially closes the second opening and at least partially covers the first opening at the third position, to
prevent the aerosol generation apparatus from being received in or removed from the receiving cavity through the second opening, and
prevent the aerosol generation apparatus in the receiving cavity from receiving the aerosol generating article through the first opening, and/or prevent dirt and another foreign matter from entering the first opening.

12. The electric system according to claim 11, wherein the second position is arranged between the first position and the third position.

13. The electric system according to claim 11, wherein the door cover partially closes the second opening at the second position; and/or
the door cover substantially completely closes the second opening at the third position.

14. The electric system according to claim 11, wherein the charging apparatus further comprises a third magnetic member; and
the door cover is provided with:
a sixth magnetic member, configured to be magnetically repelled from the third magnetic member when the door cover is at the third position, to maintain the door cover at the third position.

15. The electric system according to claim 14, wherein the charging apparatus comprises a first side and a second side that face away from each other along a width direction;
the receiving cavity is arranged close to the second side; and
when the door cover is at the third position, the sixth magnetic member is closer to the second side than the third magnetic member is.

16. The electric system according to any one of claims 1 to 3, wherein the aerosol generation apparatus comprises a protrusion that is exposed or extends out of the receiving cavity when the aerosol generation apparatus is received in the receiving cavity; and
a user can actuate the protrusion during use, to remove the aerosol generation apparatus from the receiving cavity.

17. The electric system according to claim 16, wherein the charging apparatus comprises:
a first side and a second side that face away from each other along a width direction, wherein
the receiving cavity is arranged close to the second side, and a third opening located on the second side is defined for the receiving cavity; and
the protrusion of the aerosol generation apparatus is exposed or extends out of the receiving cavity through the third opening when the aerosol generation apparatus is received in the receiving cavity.

18. The electric system according to any one of claims 1 to 3, wherein the aerosol generation apparatus comprises an outer side surface surrounding the aerosol generation apparatus along a circumferential direction; and
the outer side surface comprises a first surface part and a second surface part, wherein
the first surface part is curved, and the second surface part is substantially flat; or
a curvature or a curvature degree of the second surface part is less than that of the first surface part.

19. The electric system according to claim 18, wherein when the aerosol generation apparatus is received in the receiving cavity, the first surface part is substantially accommodated or hidden in the receiving cavity, and the second surface part is substantially exposed or extends out of the receiving cavity.

20. The electric system according to any one of claims 1 to 3, wherein when the aerosol generation apparatus is received and charged in the receiving cavity of the charging apparatus, the aerosol generation apparatus is configured to be capable of heating, in response to an operation or an input of a user, the aerosol generating article received through the first opening.

21. The electric system according to claim 20, wherein the aerosol generation apparatus comprises:
a heater, configured to heat the aerosol generating article;
a chargeable first battery cell, configured to at least supply power to the heater; and
a circuit, configured to be capable of simultaneously charging the first battery cell by using a part of electric power provided by the charging apparatus, and outputting a part of the electric power provided by the charging apparatus to the heater, to heat the aerosol generating article.

22. The electric system according to claim 20, wherein the aerosol generation apparatus is configured to be capable of receiving electric power of the charging apparatus intermittently or in pulses for charging; and
the aerosol generation apparatus is configured to heat the aerosol generating article at an intermission or between adjacent pulses of receiving the electric power of the charging apparatus.

23. The electric system according to any one of claims 1 to 3, wherein when the aerosol generation apparatus is received and charged in the receiving cavity of the charging apparatus, the aerosol generation apparatus is configured to be capable of pausing or interrupting charging in response to an operation or an input of a user and heating the aerosol generating article received through the first opening, and resuming charging until heating ends.

24. An electric system, comprising:
an aerosol generation apparatus, configured to heat an aerosol generating article to generate aerosol, wherein the aerosol generation apparatus comprises a first opening, to receive the aerosol generating article; and
a charging apparatus, configured to charge the aerosol generation apparatus, wherein the charging apparatus comprises a receiving cavity, and the aerosol generation apparatus is detachably received in the receiving cavity for charging, wherein
the charging apparatus is constructed to be selectively configured among a first configuration, a second configuration, and a third configuration, wherein
when the charging apparatus is in the first configuration, the aerosol generation apparatus is allowed to be received in the receiving cavity or removed from the receiving cavity;
when the charging apparatus is in the second configuration, the aerosol generation apparatus received in the receiving cavity is prevented from being removed from the receiving cavity, and the aerosol generating article is allowed to be received in the aerosol generation apparatus through the first opening for heating; and
when the charging apparatus is in the third configuration, the aerosol generation apparatus received in the receiving cavity is prevented from being removed from the receiving cavity, and the aerosol generation apparatus in the receiving cavity is prevented from receiving the aerosol generating article through the first opening.

25. An electric system, comprising:
an aerosol generation apparatus, configured to heat an aerosol generating article to generate aerosol, wherein the aerosol generation apparatus comprises a first opening, to receive the aerosol generating article; and
a charging apparatus, configured to charge the aerosol generation apparatus, wherein
the charging apparatus comprises a receiving cavity, configured to receive the aerosol generation apparatus, wherein
a second opening is defined for the receiving cavity, and the aerosol generation apparatus can be detachably received in the receiving cavity through the second opening; and
the charging apparatus is constructed to be selectively configured between a first configuration and a second configuration, wherein
when the charging apparatus is in the first configuration, the second opening is opened, to allow the aerosol generation apparatus to be received in the receiving cavity or removed from the receiving cavity through the second opening; and
when the charging apparatus is in the second configuration, the second opening is at least partially closed, and the first opening is avoided or exposed, to prevent the aerosol generation apparatus received in the receiving cavity from being removed through the second opening, and allow the aerosol generating article to be received in the aerosol generation apparatus through the first opening.

26. An electric system, comprising:
an aerosol generation apparatus, configured to heat an aerosol generating article to generate aerosol, wherein the aerosol generation apparatus comprises a first opening, to receive the aerosol generating article; and
a charging apparatus, configured to charge the aerosol generation apparatus, wherein
the charging apparatus comprises:
a receiving cavity, configured to receive the aerosol generation apparatus, wherein a second opening is defined for the receiving cavity, and the aerosol generation apparatus can be detachably received in the receiving cavity through the second opening; and
a door cover that can be selectively configured among a first position, a second position, and a third position, wherein
the door cover opens the second opening at the first position, to allow the aerosol generation apparatus to be detachably received in the receiving cavity through the second opening;
the door cover at least partially closes the second opening at the second position, and avoids or exposes the first opening, to prevent the aerosol generation apparatus received in the receiving cavity from being removed through the second opening, and allow the aerosol generating article to be received in the aerosol generation apparatus through the first opening; and
the door cover at least partially closes the second opening at the third position, and closes the first opening, to
prevent the aerosol generation apparatus received in the receiving cavity from being removed through the second opening, and
prevent the aerosol generation apparatus in the receiving cavity from receiving the aerosol generating article through the first opening, and/or prevent dirt and another foreign matter from entering the first opening.

27. A charging apparatus, configured to charge an aerosol generation apparatus, wherein
the aerosol generation apparatus is configured to receive an aerosol generating article and heat the aerosol generating article to generate aerosol; and
the charging apparatus comprises a receiving cavity, wherein the aerosol generation apparatus is detachably received in the receiving cavity for charging; and
the charging apparatus is constructed to be selectively configured among a first configuration, a second configuration, and a third configuration, wherein
when the charging apparatus is in the first configuration, the aerosol generation apparatus is allowed to be received in the receiving cavity or removed from the receiving cavity;
when the charging apparatus is in the second configuration, the aerosol generation apparatus received in the receiving cavity is prevented from being removed from the receiving cavity, and the aerosol generating article is allowed to be received in the aerosol generation apparatus for heating; and
when the charging apparatus is in the third configuration,
the aerosol generation apparatus received in the receiving cavity is prevented from being removed from the receiving cavity, and
the aerosol generation apparatus in the receiving cavity is prevented from receiving the aerosol generating article, and/or dirt and another foreign matter is prevented from entering the first opening.

28. A charging apparatus, configured to charge an aerosol generation apparatus, wherein
the aerosol generation apparatus comprises a first opening, to receive an aerosol generating article;
the charging apparatus comprises:
a receiving cavity, configured to at least partially receive the aerosol generation apparatus; and
a second opening, wherein the aerosol generation apparatus can be detachably received in the receiving cavity through the second opening during use; and
the charging apparatus is constructed to be selectively configured between a first configuration and a second configuration, wherein
when the charging apparatus is in the first configuration, the second opening is opened, to allow the aerosol generation apparatus to be received in the receiving cavity or removed from the receiving cavity through the second opening; and
when the charging apparatus is in the second configuration, the second opening is at least partially closed, and the first opening is avoided or exposed, to prevent the aerosol generation apparatus received in the receiving cavity from being removed through the second opening, and allow the aerosol generating article to be received in the aerosol generation apparatus through the first opening.

29. A charging apparatus, configured to charge an aerosol generation apparatus, wherein the aerosol generation apparatus comprises a first opening, to receive an aerosol generating article; and the charging apparatus comprises:
a receiving cavity, configured to receive the aerosol generation apparatus;
a second opening, wherein the aerosol generation apparatus can be detachably received in the receiving cavity through the second opening; and
a door cover that can be selectively configured between a first position and a second position, wherein
the door cover opens the second opening at the first position, to allow the aerosol generation apparatus to be detachably received in the receiving cavity through the second opening; and
the door cover at least partially closes the second opening at the second position, and avoids or exposes the first opening, to prevent the aerosol generation apparatus received in the receiving cavity from being removed through the second opening, and allow the aerosol generating article to be received in the aerosol generation apparatus through the first opening.

30. The charging apparatus according to claim 29, wherein the door cover is arranged to be movable between the first position and the second position, to change a configuration between the first position and the second position.

31. The charging apparatus according to claim 30, wherein the movement comprises at least one of a linear movement or a rotational movement.

32. The charging apparatus according to any one of claims 29 to 31, wherein the charging apparatus comprises:
a first end and a second end that face away from each other along a length direction, wherein
the second opening is defined at the first end; and
the door cover is movably arranged at the first end.

33. The charging apparatus according to claim 32, wherein the charging apparatus is configured to enable the aerosol generation apparatus received in the receiving cavity to bias the second end when the door cover is at the second position.

34. The charging apparatus according to claim 33, wherein the aerosol generation apparatus comprises a first magnetic member; and
the door cover is provided with:
a second magnetic member, configured to be magnetically repelled from the first magnetic member when the door cover is at the second position, to enable the aerosol generation apparatus to bias the second end.

35. The charging apparatus according to claim 34, wherein the second magnetic member and the first magnetic member are substantially aligned along the length direction of the charging apparatus when the door cover is at the second position.

36. The charging apparatus according to claim 34, wherein the charging apparatus comprises:
a first side and a second side that face away from each other along a width direction, wherein
the receiving cavity is arranged close to the second side; and
the first magnetic member is positioned away from the second side when the aerosol generation apparatus is received in the receiving cavity.

37. The charging apparatus according to any one of claims 29 to 31, wherein the charging apparatus further comprises a third magnetic member; and the door cover is provided with:
a fourth magnetic member, configured to magnetically attract the third magnetic member when the door cover is at the first position, to maintain the door cover at the first position; and/or
a fifth magnetic member, configured to magnetically attract the third magnetic member when the door cover is at the second position, to maintain the door cover at the second position.

38. The charging apparatus according to any one of claims 29 to 31, wherein the door cover can further be selectively configured at a third position; and
the door cover at least partially closes the second opening and at least partially closes the first opening at the third position, to prevent the aerosol generation apparatus from being received in or removed from the receiving cavity through the second opening, and prevent the aerosol generation apparatus in the receiving cavity from receiving the aerosol generating article through the first opening.

39. The charging apparatus according to claim 38, wherein the second position is arranged between the first position and the third position.

40. The charging apparatus according to claim 38, wherein the door cover partially closes the second opening at the second position; and/or
the door cover substantially completely closes the second opening at the third position.

41. The charging apparatus according to claim 38, wherein the charging apparatus further comprises a third magnetic member; and
the door cover is provided with:
a sixth magnetic member, configured to be magnetically repelled from the third magnetic member when the door cover is at the third position, to maintain the door cover at the third position.

42. The charging apparatus according to claim 41, wherein the charging apparatus comprises:
a first side and a second side that face away from each other along a width direction, wherein
the receiving cavity is arranged close to the second side; and
when the door cover is at the third position, the sixth magnetic member is closer to the second side than the third magnetic member is.

43. An aerosol generation apparatus, configured to heat an aerosol generating article to generate aerosol, wherein the aerosol generation apparatus comprises:
a chargeable battery cell;
a charging port, wherein the battery cell can be charged by inputting electric power to the charging port;
a first opening, configured to receive the aerosol generating article; and
a circuit, configured to be capable of heating, in response to an operation or an input of a user when the battery cell is charged through the charging port, the aerosol generating article received through the first opening.

44. The aerosol generation apparatus according to claim 43, wherein the aerosol generation apparatus comprises:
a heater, configured to heat the aerosol generating article, wherein
the circuit is configured to be capable of simultaneously charging the battery cell by using a part of the electric power inputted through the charging port, and outputting a part of the electric power inputted through the charging port to the heater, to heat the aerosol generating article.

45. The aerosol generation apparatus according to claim 43, wherein the circuit is configured to be capable of charging the battery cell intermittently or in pulses by using the electric power inputted through the charging port; and
the circuit is configured to enable the heater to heat the aerosol generating article at an intermission or between adjacent pulses.

46. The aerosol generation apparatus according to claim 43, wherein the circuit is configured to be capable of pausing or interrupting charging of the battery cell in response to an operation or an input of a user and heating the aerosol generating article received through the first opening, and resuming charging until heating ends.

47. An electric system, comprising:
an aerosol generation apparatus, configured to heat an aerosol generating article to generate aerosol, wherein the aerosol generation apparatus comprises a first opening, to receive the aerosol generating article; and
a charging apparatus, configured to charge the aerosol generation apparatus, wherein
the charging apparatus comprises:
a receiving cavity, configured to receive the aerosol generation apparatus, wherein a second opening is defined for the receiving cavity, and the aerosol generation apparatus can be detachably received in the receiving cavity through the second opening;
an elastic electrical contact that can be selectively actuated between an extended state and a compressed state and biased to return to the extended state, wherein the elastic electrical contact is at least partially exposed in the receiving cavity, to be configured to output electric power to the aerosol generation apparatus received in the receiving cavity; and
a door cover that can be selectively configured between a first position and a second position, wherein
the door cover opens the second opening at the first position, to allow the aerosol generation apparatus to be detachably received in the receiving cavity through the second opening;
the door cover at least partially closes the second opening at the second position, and partially abuts against or presses against the aerosol generation apparatus received in the receiving cavity, to enable the aerosol generation apparatus to press against the elastic electrical contact to the compressed state, and establish a conductive connection to the elastic electrical contact; and
the door cover avoids the first opening at the second position.

48. The electric system according to claim 47, wherein when the door cover is moved from the second position to the first position, the elastic electrical contact is configured to be capable of being actuated from the compressed state to the extended state, to at least partially push or pop up the second opening through which the aerosol generation apparatus is received in the receiving cavity.

49. The electric system according to claim 47 or 48, wherein the elastic electrical contact comprises at least one conductive elastic pin.

50. The electric system according to claim 47 or 48, wherein the charging apparatus further comprises:
a bias mechanism, configured to enable the aerosol generation apparatus to bias the elastic electrical contact to the compressed state when the door cover is at the second position.

51. The electric system according to claim 50, wherein the bias mechanism comprises:
a first magnetic member, arranged on the aerosol generation apparatus;
a second magnetic member, arranged on the door cover, and configured to be magnetically repelled from the first magnetic member when the door cover is at the second position, to enable, through magnetic repelling, the aerosol generation apparatus to bias the elastic electrical contact to the compressed state.

52. The electric system according to claim 50, wherein the bias mechanism comprises a spring.

53. The electric system according to claim 47 or 48, wherein the door cover can further be selectively configured at a third position; and
the door cover simultaneously closes the second opening and the first opening at the third position, and the door cover at least partially abuts against or presses against, at the third position, the aerosol generation apparatus received in the receiving cavity, to enable the aerosol generation apparatus to press against the elastic electrical contact to the compressed state, and establish a conductive connection to the elastic electrical contact.

54. An electric system, comprising:
an aerosol generation apparatus, configured to heat an aerosol generating article to generate aerosol, wherein the aerosol generation apparatus comprises a first opening, to receive the aerosol generating article; and
a charging apparatus, configured to charge the aerosol generation apparatus, wherein
the charging apparatus comprises:
a receiving cavity, configured to receive the aerosol generation apparatus, wherein a second opening is defined for the receiving cavity, and the aerosol generation apparatus can be detachably received in the receiving cavity through the second opening;
an elastic electrical contact that can be selectively actuated between an extended state and a compressed state and biased to return to the extended state, wherein the elastic electrical contact is at least partially exposed in the receiving cavity, to be configured to output electric power to the aerosol generation apparatus received in the receiving cavity; and
the charging apparatus is constructed to be selectively configured between a first configuration and a second configuration, wherein
when the charging apparatus is in the first configuration, the second opening is opened, to allow the aerosol generation apparatus to be received in the receiving cavity or removed from the receiving cavity through the second opening;
when the charging apparatus is in the second configuration, the second opening is at least partially closed, and the aerosol generation apparatus received in the receiving cavity is partially abutted or pressed, to enable the aerosol generation apparatus to at least partially press against the elastic electrical contact to the compressed state, and establish a conductive connection to the elastic electrical contact; and
when the charging apparatus is in the second configuration, the first opening is avoided or exposed.

55. The electric system according to claim 54, wherein the charging apparatus can further be selectively configured at a third position; and
the charging apparatus simultaneously closes the second opening and the first opening at the third position, and the charging apparatus at least partially abuts against or presses against, at the third position, the aerosol generation apparatus received in the receiving cavity, to enable the aerosol generation apparatus to press against the elastic electrical contact to the compressed state, and establish a conductive connection to the elastic electrical contact.

56. A charging apparatus, configured to charge an aerosol generation apparatus, wherein the aerosol generation apparatus comprises a first opening, to receive an aerosol generating article; and the charging apparatus comprises:
a receiving cavity, configured to at least partially receive the aerosol generation apparatus;
a second opening, wherein the aerosol generation apparatus can be detachably received in the receiving cavity through the second opening during use; and
an elastic electrical contact that can be selectively actuated between an extended state and a compressed state and biased to return to the extended state, wherein
the elastic electrical contact is at least partially exposed in the receiving cavity, to be configured to output electric power to the aerosol generation apparatus received in the receiving cavity; and
the charging apparatus is constructed to be selectively configured between a first configuration and a second configuration, wherein
when the charging apparatus is in the first configuration, the second opening is opened, to allow the aerosol generation apparatus to be received in the receiving cavity or removed from the receiving cavity through the second opening;
when the charging apparatus is in the second configuration, the second opening is at least partially closed, and the aerosol generation apparatus received in the receiving cavity is partially abutted or pressed, to enable the aerosol generation apparatus to at least partially press against the elastic electrical contact to the compressed state, and establish a conductive connection to the elastic electrical contact; and
when the charging apparatus is in the second configuration, the first opening is avoided or exposed.

57. A charging apparatus, configured to charge an aerosol generation apparatus, wherein the aerosol generation apparatus comprises a first opening, to receive an aerosol generating article; and the charging apparatus comprises:
a receiving cavity, configured to at least partially receive the aerosol generation apparatus;
a second opening, wherein the aerosol generation apparatus can be detachably received in the receiving cavity through the second opening during use;
an elastic electrical contact that can be selectively actuated between an extended state and a compressed state and biased to return to the extended state, wherein the elastic electrical contact is at least partially exposed in the receiving cavity, to be configured to output electric power to the aerosol generation apparatus received in the receiving cavity; and
a door cover that can be selectively configured between a first position and a second position, wherein
the door cover opens the second opening at the first position, to allow the aerosol generation apparatus to be detachably received in the receiving cavity through the second opening;
the door cover at least partially closes the second opening at the second position, and partially abuts against or presses against the aerosol generation apparatus received in the receiving cavity, to enable the aerosol generation apparatus to press against the elastic electrical contact to the compressed state, and establish a conductive connection to the elastic electrical contact; and
the door cover avoids the first opening at the second position.
